**Europäisches Patentamt**

**European Patent Office**

**Office européen des brevets**

(19)

(11) Veröffentlichungsnummer : **0 077 989**
**B1**

(12) **EUROPÄISCHE PATENTSCHRIFT**

(45) Veröffentlichungstag der Patentschrift :
05.06.85

(21) Anmeldenummer : **82109575.9**

(22) Anmeldetag : **16.10.82**

(51) Int. Cl.⁴ : **C 08 G 18/38**

(54) Verfahren zur Herstellung viskositätsstabiler Polyurethanlösungen.

(30) Priorität : 28.10.81 DE 3142706

(43) Veröffentlichungstag der Anmeldung :
04.05.83 Patentblatt 83/18

(45) Bekanntmachung des Hinweises auf die Patenterteilung : 05.06.85 Patentblatt 85/23

(84) Benannte Vertragsstaaten :
BE DE FR GB IT NL

(56) Entgegenhaltungen :
DE-A- 1 595 784
DE-A- 2 020 905
DE-B- 2 500 921

(73) Patentinhaber : BAYER AG
Konzernverwaltung RP Patentabteilung
D-5090 Leverkusen 1 Bayerwerk (DE)

(72) Erfinder : Halpaap, Reinhard, Dr.
Kleinfeldchenweg 37 b
D-5000 Köln 91 (DE)
Erfinder : Pedain, Josef, Dr.
Haferkamp 6
D-5000 Köln 80 (DE)
Erfinder : Thoma, Wilhelm, Dr.
Birkenweg 25
D-5090 Leverkusen 31 (DE)
Erfinder : Grammel, Jürgen, Dr.
Severinstrasse 129
D-5000 Köln 1 (DE)

**Beschreibung**

Die Erfindung betrifft ein Verfahren zur Einstellung definierter Viskositäten bei der Herstellung von lagerstabilen Polyurethanlösungen durch Kettenabbruchreaktion an relativ hochmolekularen Polyurethanen mittels geringer Mengen an niedermolekularen Monooximen.

Die Herstellung von Polyurethanlösungen aus organischen Polyisocyanaten und organischen Verbindungen, die mehrfunktionell bewegliche, d. h. gegenüber Isocyanaten reaktive Wasserstoffatome enthalten, ist seit langem Stand der Technik. Werden die Polyisocyanate und Polyole in ungefähr äquivalenten Mengen verwendet, so ist es häufig schwierig, Polyurethanlösungen mit reproduzierbaren, definierten physikalischen Eigenschaften, insbesondere einer gleich hohen Viskosität, zu erhalten. Der kritische Bereich liegt ungefähr bei einem NCO/OH-Verhältnis von 0,9 : 1 bis 1 : 0,9. Geringe Schwankungen des NCO-/OH-Verhältnisses, die im Produktionsmaßstab unausweichlich sind, führen zu erheblich unterschiedlichen Polyurethanen. Durch den unter diesen Bedingungen wesentlich schwankenden Anteil hochvernetzter Teilchen werden die physikalischen Eigenschaften der Polyurethanlösungen drastisch verändert.

Zur Erzielung von Produkten möglichst einheitlicher und reproduzierbarer Qualität wurden Methoden entwickelt, um die Urethanisierungsreaktion beim Erreichen der gewünschten Viskosität, d. h. des gewünschten Polymerisations- und Vernetzungsgrades, gezielt möglichst schnell abbrechen zu können.

Es ist bekannt, daß man die Polyadditionsreaktion durch Zugabe monofunktioneller Verbindungen mit beweglichen Wasserstoffatomen, die mit den freien Isocyanatgruppen abreagieren, wie z. B. Alkoholen oder primären und sekundären Amine, durch Kettenabbruch beenden kann.

Nach einem Verfahren der kanadischen Patentschrift 888 781 wird zum Abbruch der Polyadditionsreaktion ein primärer Alkohol zugesetzt. In der DE-OS-2 323 393 wird vorgeschlagen, dem Reaktionsgemisch von Anfang an einen sterisch gehinderten sekundären Alkohol zuzumischen, um einen vorzeitigen Kettenabbruch aber auch eine zu weitgehende Vernetzung des Polyurethans zu verhindern.

In der DE-AS-1 157 386 wird beschrieben, endständig Hydrazidgruppen enthaltende Polyurethanlösungen durch einen Unterschuß weniger reaktiver Polyisocyanate bis zur gewünschten Viskosität nachzuverlängern. Der Kettenabbruch erfolgt durch Umsetzung mit monofunktionellen Isocyanaten oder mit Acylierungsmitteln.

Die Polyadditionsreaktion zwischen Polyisocyanat und Polyol kann nach dem Stand der Technik auch vorteilhaft und sehr schnell durch Zugabe eines überschüssigen monofunktionellen Amins, das bevorzugt mit den noch vorhandenen Isocyanatgruppen reagiert, durch Kettenabbruch beendet werden. Da jedoch überschüssiges Amin durch partielle Verseifung von Esterfunktionen nachträglich ungezielten Kettenabbau und Viskositätssenkung verursacht, wurden Methoden entwickelt, die den Vorteil des schnellen Reaktionsabbruchs mit Amin beibehalten, den Aminüberschuß jedoch durch nachfolgende Umsetzungen aus dem Reaktionsgemisch entfernen.

Im US-Patent 3 135 711 wird deshalb vorgeschlagen, nach der Aminzugabe zur Beendigung der Polyadditionsreaktion überschüssiges Amin mit Pyrokohlensäureestern umzusetzen.

Für den gleichen Zweck eignen sich nach der DE-OS-2 500 921 Monoisocyanate. Nach diesem Vorschlag ist es Stand der Technik, die Polyadditionsreaktion nach Erreichen der gewünschten Viskosität durch überschüssiges Monoamin zu beenden. Dieser Überschuß wiederum wird durch Zugabe eines Monoisocyanats gebunden, so daß viskositätsstabile Polyurethanlösungen erhalten werden.

Sämtliche der genannten Methoden weisen schwerwiegende Nachteile auf. Ein Abbrechen der Polyadditionsreaktion mit monofunktionellen Alkoholen erfolgt langsam. Die Konkurrenzreaktionen der mono- und bifunktionellen OH-Komponenten verlaufen parallel weiter, so daß für einen wirkungsvollen Kettenabbruch ein sehr hoher Alkoholüberschuß erforderlich ist. Ein hoher Alkoholüberschuß jedoch, ebenso wie ein Aminüberschuß, wirkt sich nachteilig auf die Viskositätsstabilität der Polymerlösung aus, da solvolytische Abbaureaktionen an den Estergruppen verursacht werden.

Das beschriebene Nachverlängern mit weniger reaktiven Diisocyanaten erfordert zu lange Reaktionszeiten, die für die Praxis nicht tragbar sind. Der nachfolgende Kettenabbruch durch Umsetzung mit monofunktionellen Verbindungen ergibt eine ebenso umständliche Fahrweise wie bei der Methode des Kettenabbruchs mit Aminen und der nachfolgenden Umsetzung mit Monoisocyanaten, da mehrfach jeweils überschüssige funktionelle Gruppen durch Überschuß neuer Reagenzien abgefangen werden müssen. Die bei diesem Verfahren entstehenden niedermolekularen Harnstoffe können auch in der weiteren Anwendung gravierend stören, wenn sich die schwer löslichen Verbindungen als heterogener Belag an der Oberfläche des Polyurethans, z. B. einer Polyurethanbeschichtung, absetzen und die Anwendung dieses Verfahrens damit verbieten.

Die vorliegende Erfindung beschreibt ein Verfahren, das die geschilderten Nachteile der bisher bekannten Verfahren nicht aufweist, und es ermöglicht, Polyurethanlösungen mit definierten, reproduzierbaren Eigenschaften und jederzeit kontrollierbarer Viskositätseinstellung herzustellen. Es wurde überraschend gefunden, daß sich dieses Ziel durch die Zugabe einer einfachen, niedermolekularen organischen Verbindung zur Reaktionsmischung der Polyhydroxyverbindungen und Polyisocyanate erreichen läßt. Die Methode, die sich durch ihre Einfachheit auszeichnet, erlaubt es, die Polyadditionsreaktion zu einem beliebigen Zeitpunkt, z. B. nach Erreichen einer gewünschten Viskosität, abzubrechen.

2

Die verwendete Verbindung reagiert spezifisch mit überschüssigen Isocyanatgruppen, entfernt diese aus der Reaktionsmischung und bricht damit die Polyadditionsreaktion ab. Überschüssige Substanz stört nicht, sie verhält sich indifferent wie ein Lösungsmittel.

Gegenstand der vorliegenden Erfindung ist ein Verfahren zur Herstellung von überwiegend linearen Polyurethanen in Lösung, aus

A) einem organischen Diisocyanat oder Diisocyanatgemisch, das gegebenenfalls geringe Anteile eines Triisocyanats enthält,

B) einer oder mehreren Polyhydroxyverbindungen, die überwiegend bifunktionell sind, mit Molekulargewichten in der Regel zwischen 400 und 5 000, und

C) gegebenenfalls einem oder mehreren Kettenverlängerungsmitteln mit mindestens zwei gegenüber Isocyanatgruppen reaktiven Wasserstoffatomen und mit Molekulargewichten zwischen 32 und 399,

D) monofunktionellen Kettenabbrechern,

wobei das Verhältnis der Isocyanatgruppen zur Anzahl der gegenüber Isocyanatgruppen reaktiven Wasserstoffatome zwischen 0,9 : 1 und 1 : 0,9 liegt, und wobei dem Reaktionsgemisch nach Erreichen der erforderlichen Viskosität bzw. eines ausreichenden hochmolekularen Aufbaus der Polyurethane als Kettenabbrecher eine gegenüber Isocyanatgruppen äquivalente oder überschüssige Menge eines niedermolekularen, aliphatischen, cycloaliphatischen oder araliphatischen Monooxims mit einem Molekulargewicht zwischen 73 und 325 zugegeben wird.

Das erfindungsgemäße Verfahren vermeidet die Nachteile der bisher bekannten Verfahren. Es zeichnet sich durch die Schnelligkeit des Kettenabbruchs mit einer einfachen organischen Verbindung, die im Gegensatz zu den bislang verwendeten Reagenzien keine störenden Nebenwirkungen in Bezug auf einen nachträglichen Kettenabbau und eine Viskositätssenkung hat, aus.

Durch das erfindungsgemäße Verfahren lassen sich Polyurethane bei vorgegebener Zusammensetzung und Konzentration reproduzierbar mit gleich hoher Viskosität, wobei der Streubereich maximal co. ± 10 %, zumeist kleiner/gleich ± 5 % beträgt, herstellen. Das erfindungsgemäße Verfahren hat weiterhin den Vorteil, daß man gegebenenfalls nach dem Abbruch der Polyadditionsreaktion mit dem Oxim die Reaktion (bei erhöhter Temperatur) fortführen und erneut mit Oxim beenden kann, was mit bisherigem Kettenabbrechern — zumindest mit praktikablen Bedingungen — nicht möglich war.

Für viele Anwendungen ist auch eine gegebenenfalls spätere Nachvernetzung der Polyurethane vorteilhaft und mit nach dem erfindungsgemäßen Verfahren hergestellten Polyurethanen problemlos zu erreichen. Die überschüssigen Isocyanatgruppen sind durch die Umsetzung mit dem Oxim weiterhin latent vorhanden und können nach den bekannten Methoden durch thermische Deblockierung — falls erforderlich — zur Reaktion gebracht werden, z. B. mit aliphatischen Polyaminen bei wenig erhöhten Temperaturen.

Aufgrund der Möglichkeit, die Polyadditionsreaktion jederzeit beenden zu können, ist es nach dem beschriebenen Verfahren möglich, Polyurethane mit gleicher Zusammensetzung, jedoch sehr unterschiedlicher Kettenlänge und daraus resultierenden unterschiedlichen Eigenschaften herzustellen. Prinzipiell lassen sich Lösungen mit Konzentrationen von z. B. 10-50 Gew.% mit beliebigen Viskositäten zwischen z. B. 500 und 80 000 mPas herstellen. Reaktionsprodukte sind somit hochmolekulare Polyurethane mit geringen Mengen an speziell blockierten Endgruppen.

Als Kettenabbruchmittel werden erfindungsgemäß niedere aliphatische, cycloaliphatische oder araliphatische Monooxime mit Molekulargewichten von 73 bis 325, vorzugsweise 73 bis 141 verwendet, wie zum Beispiel Acetonoxim, Butanonoxim, 3-Methylbutanonoxim, 3,3-Dimethylbutanonoxim, 2- und 3-Pentanonoxim, 4-Methyl-2-pentanonoxim, Cyclopentanonoxim, 2,2,4 (2,4,4)-Trimethylcyclopentanonoxim, Cyclohexanonoxim, Acetophenonoxim ; bevorzugt wird Butanonoxim eingesetzt.

Es erweist sich als günstig, wenn beim Erreichen der gewünschten Viskosität der Polyurethanlösung weniger als 0,4 Gew.-%, vorzugsweise weniger als 0,25 Gew.-%, besonders bevorzugt weniger als 0,15 Gew.-% NCO, d. h. nicht umgesetzter NCO-Gruppen vorhanden sind. Zum Kettenabbruch der Polyadditionsreaktion wird eine dazu mindestens äquivalente Menge benötigt, in der Regel jedoch überschüssiges Monooxim zugesetzt. Die für den Kettenabbruch verwendeten Mengen liegen im allgemeinen zwischen 0,05 und 2 Gew.-% Oxim, bezogen auf Feststoff, vorzugsweise im Bereich von 0,08 bis 1 Gew.-%. Überschüssiges Reagenz stört nicht und verhält sich wie ein Lösungsmittel.

Als Ausgangsstoffe für die nach dem beschriebenen Verfahren herstellbaren Polyurethanlösungen werden die üblichen Polyisocyanate, Polyhydroxyverbindungen und Kettenverlängerungsmittel verwendet. Es werden organische Lösungsmittel, die in der Polyurethanchemie üblich sind, eingesetzt.

Als Polyisocyanate sind für das erfindungsgemäße Verfahren die üblichen bekannten Verbindungen geeignet, wobei aliphatische, cycloaliphatische, araliphatische, aromatische und heterocyclische Polyisocyanate mit einer NCO-Funktionalität von 2-4, vorzugsweise 2, wie sie z. B. bei W. Siefken, Liebigs Ann. Chem. *562*, 75 (1948) beschrieben sind, eingesetzt werden können. Die Isocyanate enthalten einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, wobei die aromatischen oder cycloaliphatischen Ringe noch mit Alkylgruppen, vorzugsweise mit bis zu 4 Alkylgruppen mit je 1-4 C-Atomen substituiert sein können, oder einen araliphatischen Kohlenwasserstoffrest mit 8-15, vorzugsweise 8-13 C-Atomen wie z. B. 1,4-Tetramethylen-diisocyanat, 1,6-Hexamethylendiisocyanat, 1,12-Dodecandiisocyanat, Cyclobutan-1,3-di-

3

isocyanat, Cyclohexan-1,3- und -1,4-diisocyanat, 1-Isocyanato-3,3,5-trimethyl-5-isocyanatomethyl-cyclohexan, 2,4- und 2,6-Hexahydrotoluylendiisocyanat, Hexahydro-1,3- und -1,4-phenylendiisocyanat, 3,3',5,5'-Tetraethyl-dicyclohexylmethan-4,4'-diisocyanat, 3,3'-Dimethyl-dicyclohexylmethan-4,4'-diisocyanat, Perhydro-2,4'- und -4,4'-diphenylmethan-diisocyanat, 1,3- und 1,4-Phenylendiisocyanat, 2,4- und 2,6-Toluylendiisocyanat, Diphenylmethan-2,4'- und/oder -4,4'-diisocyanat, Naphthylen-1,5-diisocyanat, sowie bei isomeren Verbindungen beliebige Gemische dieser Isomeren (oder ihrer Konformeren im Falle von cycloaliphatischen Verbindungen).

Außerdem können kleine Anteile ($\leq 5$ Mol-%) an höherfunktionellen Isocyanaten mitverwendet werden, wie beispielsweise Benzol-1,3,5-triisocyanat, Triphenylmethan-4,4',4"-triisocyanat, Polyphenylpolymethylenpolyisocyanate, wie sie in den GB-Patentschriften 874 430 und 848 671 beschrieben werden, Biuretgruppen aufweisende Polyisocyanate, wie sie z. B. in den US-Patentschriften 3 124 605 und 3 201 372, sowie in der GB-Patentschrift 889 050 beschrieben werden, sowie Isocyanuratgruppen aufweisende Polyisocyanate, wie sie z. B. in der US-Patentschrift 3 001 973, in den DE-Patentschriften 1 022 789, 1 222 067 und 1 027 394, sowie in den DE-Offenlegungsschriften 1 929 034 und 2 004 048 beschrieben werden.

Als Isocyanate kommen im erfindungsgemäßen Verfahren ebenfalls in Frage : 3- und 4-Isocyana-tophenylsulfonylisocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodii-midgruppen aufweisende Polyisocyanate, wie sie in der DE-Patentschrift 1 092 007 (US-Patentschrift 3 152 162) sowie in den DE-Offenlegungschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, durch Telomerisationsreaktionen hergestellte Polyisocyanate, wie sie z. b. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Bevorzugte Polyisocyanate sind die technisch leicht zugänglichen Verbindungen wie z. B. p-Phenylendiisocyanat, Diphenylmethan-4,4'-diisocyanat, Toluylendiisocyanat, Naphthalin-1,5-diisocyanat, Isophorondiisocyanat, Hexamethylendiisocyanat und Trimethylhexamethylendiisocyanat.

Als Polyhydroxyverbindungen eignen sich Polyester, Polyesteramide, Polyether, Polyacetale und Polycarbonate, wie sie üblicherweise bei der Polyurethanherstellung verwendet werden. Vorzugsweise werden Verbindungen mit zwei Hydroxylgruppen pro Molekül eingesetzt, mit einem mittleren Molekulargewicht von 400-5 000, vorzugsweise 800-3 000.

Die für das erfindungsgemäße Verfahren geeigneten Hydroxylgruppen enthaltenden Polyester sind Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren.

Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und heterocyclischer Natur sein. Verwendbare Polyester werden beispielsweise auch in Houben-Weyl-Müller, XIV/2, S. 12-29, Thieme, Stuttgart 1963 beschrieben.

Als Beispiele für solche Carbonsäuren und deren Derivate seien genannt : Oxalsäure, Malonsäure, Bernsteinsäure, Glutarsäure, Adipinsäure, Pimelinsäure, Korksäure, Azelainsäure, Sebacinsäure, Maleinsäure, Fumarsäure, Phthalsäure, Isophthalsäure, Terephthalsäure, Diethylbernsteinsäure und 1,4-Cyclohexandicarbonsäure.

Als Alkoholkomponenten können beispielsweise Ethylenglycol, Diethylenglycol, Triethylenglycol, 1,2- und 1,3-Propandiol, 1,4- und 2,3-Butandiol, 1,5-Pentandiol, 1,6-Hexandiol, 1,8-Octandiol, Neopentylglycol, 1,4-Bis (hydroxymethyl-)cyclohexan und 2-Methyl-1,3-propandiol verwendet werden. In unterge-ordneten Maße ($\leq$ etwa 5 Mol-%) lassen sich auch höherfunktionelle Polyole wie beispielsweise Glycerin, Trimethylolpropan, 1,2,6-Hexantriol, 1,2,4-Butantriol, Pentaerythrit oder Sorbit verwenden. Es sind auch Polyester mit anteiligen Doppel- oder Dreifachbindungen aus ungesättigten Fettsäuren einsetzbar, ebenso Polyester aus Lactonen wie z. B. -Caprolacton oder aus Hydroxycarbonsäuren wie z. B. -Hydroxycapronsäure.

Für das beschriebene Verfahren verwendbare Polyesteramide entstehen bei anteiligem Ersatz des zweiwertigen Alkohols der Polyester durch Aminoalkohole, Diamine oder Polyamine. Bevorzugt werden dabei Ethanolamin oder Ethylendiamin.

Als höhermolekulare Polyhydroxyverbindungen können erfindungsgemäß auch lineare oder schwach verzweigte, vorzugsweise zwei bis drei Hydroxylgruppen aufweisende Polyether dienen, z. B. Additionsprodukte aus Alkylenoxiden an Starterverbindungen. Als Alkylenoxide eignen sich beispielsweise Ethylenoxid, Propylenoxid, Butylenoxid, Tetrahydrofuran, Styroloxid und Epihalogenhydrine. Als

4

0 077 989

Starterkomponenten werden Verbindungen mit beweglichen H-Atomen eingesetzt wie Wasser, Alkohole, Ammoniak, Amine, z. B. Ethylenglycol, 1,2- und 1,3-Propylenglycol, Trimethylolpropan, Glycerin, Sorbit, Formit-Gemische, 2,2-Bis(4-hydroxyphenyl)-propan, Anilin, Ethanolamin und Ethylendiamin.

Als Polyhydroxylverbindungen sind ebenfalls Polyacetale einsetzbar, die z. B. durch Kondensation von Formaldehyd oder eines anderen Aldehyds mit mehrwertigen Alkoholen der beschriebenen Art entstehen. Ebenso verwendbar sind auch Polycarbonate der an sich bekannten Art, die z. B. aus Diolen mit z. B. Diphenylcarbonat oder Phosgen hergestellt werden können.

Neben den beschriebenen höhermolekularen Polyhydroxyverbindungen können niedermolekulare Kettenverlängerungsmittel mit beweglichen Wasserstoffatomen mitverwendet werden, die mindestens bifunktionell mit Isocyanaten reagieren und Molekulargewichte von 32 bis 399 aufweisen. Vorzugsweise sind für diesen Zweck niedermolekulare Diole, Aminoalkohole oder Diamine geeignet.

Erfindungsgemäß geeignete Kettenverlängerungsmittel sind z. B. Ethylenglycol, 1,2- und 1,3-Propanodiol, 1,4- und 2,3-Butandiol, 1,5-Pentandiol, 1,6-Hexandiol, 1,8-Octandiol, Neopentylglycol, 1,4-Bis(hydroxymethyl)-cyclohexan, 2-Methyl-1,3-propandiol, Diethylenglycol, Triethylenglycol, Tetraethylenglycol, Dipropylenglycol, 4,4'-Dihydroxy-diphenylpropan, Ethanolamin, Diethanolamin, N-Methyldiethanolamin, 3-Aminopropanol. Ebenso eignen sich Ethylendiamin, 1,4-Tetramethylendiamin, 1,11-Undecamethylendiamin, 1,12-Dodecamethylendiamin, 1-Amino-3-aminomethyl-3,5,5-trimethylcyclohexan, 2,4- und 2,6-Hexahydrotoluylendiamin, 2,4'- und 4,4'-Diaminodicyclohexylmethan, 1-Amino-2-aminomethyl-3,3,5(3,5,5)-trimethylcyclopentan, Toluylendiamin, p-Xylylendiamin, 4,4'-Diaminodiphenylmethan, Hydrazin, Methylhydrazin, N,N'-Dimethylhydrazin und deren Homologe.

Ausführliche Beispiele für diese erfindungsgemäßen Ausgangsmaterialien (Polyisocyanate, höhermolekulare Polyhydroxyverbindungen und niedermolekulare Kettenverlängerungsmittel, sowie gegebenenfalls Katalysatoren, Hilfs- und Zusatzstoffe) werden in der DE-A 2 854 384 aufgeführt.

Die nach dem erfindungsgemäßen Verfahren hergestellten Polyurethanlösungen sind für zahlreiche Anwendungsgebiete einsetzbar. Bevorzugt werden sie für Produkte verwendet, die eine exakte Reproduzierbarkeit der Eigenschaften erfordern. Besonders eignen sie sich zur Herstellung von Beschichtungen, Überzügen und Lacken.

Die Polyurethanlösungen werden nach dem erfindungsgemäßen Verfahren vorzugsweise so hergestellt, daß man zur Lösung der höhermolekularen Polyole und niedermolekularen Kettenverlängerungsmittel in einem Teil des Lösungsmittels die Polyisocyanate zugibt. Mit fortschreitender Umsetzung und steigender Viskosität kann dann portionsweise bis zur erforderlichen Endkonzentration nachverdünnt werden. Die Reaktionstemperaturen liegen bei 30 bis 130 °C, vorzugsweise bei 50 bis 100 °C. Die Erhöhung der Kettenlänge und Steigerung der Viskosität kann gegebenenfalls durch nachträgliche Zugabe geringer Mengen des Polyisocyanats erreicht werden.

Alternativ dazu kann man in einer Zweistufenreaktion zunächst die höhermolekularen Polyole mit den Diisocyanaten in einem Teil des Lösungsmittel umsetzen. Nachfolgend wird mit den genannten niedermolekularen Kettenverlängerungsmitteln die Polymerkette verlängert und die Viskosität erhöht ; man verdünnt gegebenenfalls wie beschrieben auf die erforderliche Endkonzentration.

Nach Erreichen der gewünschten Endviskosität wird die Reaktion erfindungsgemäß abgebrochen. Die gewünschten Endviskositäten liegen bei Raumtemperatur und Konzentrationen von ca. 20-40 Gew.-% zwischen etwa 1 000 bis 100 000 mPa · s, bevorzugt sind Konzentrationen von 25-40 Gew.-% und Viskositäten zwischen 5 000 und 80 000 mPa · s.

In den Beispielen angegebene Teile und Prozente sind Gewichtsteile und Gewichtsprozente. Mol-Angaben der Polyhydroxyverbindungen beziehen sich auf mittlere Molekulargewichte und OH-Zahlen.

Verwendete Abkürzungen :
DMF = Dimethylformamid
MEK = Methylethylketon
T    = Toluol.

## Beispiel 1

2.250 Teile (1,0 Mol) eines Hydroxylpolyesters aus Adipinsäure und Butandiol mit einem mittleren Molekulargewicht von 2.250, 283 Teile (4,56 Mol) Ethandiol und 22 Teile (0,24 Mol) 1,4-Butandiol werden mit 1.452 Teilen (5,8 Mol) 4,4'-Diisocyanatodiphenylmethan in 7.441 Teilen eines Gemischs aus DMF/MEK/T (60 : 25 : 15) umgesetzt. Nach Erreichen eines Viskosität bei 80 °C von ungefähr 12.000 mPa · s und einem NCO-Gehalt der Lösung < 0,1 % werden 24 Teile Butanonoxim zugegeben, und es wird ca. 1 Stunde bei 80 °C nachgerührt. Man erhält eine Polyurethanlösung mit einer Viskosität von 36.000 mPa · s/23 °C. Nach 10 Tagen Lagerung bei Raumtemperatur hat sich die Viskosität nicht verändert.

## Beispiel 2

2.250 Teile (1,0 Mol) des gleichen Polyesters wie in Beispiel 1 und 216 Teile (2,4 Mol) 1,4-Butandiol werden mit 851 Teilen (3,4 Mol) 4,4'-Diisocyanatodiphenylmethan zu einer Polyurethanlösung in 4.976 Teilen DMF/Toluol (3 : 2) umgesetzt. Man erreicht bei 80 °C eine ungefähre Viskosität von 17.000 mPa · s und bricht die Polyadditionsreaktion mit 50 Teilen Butanonoxim ab. Es wird eine 40 %ige Lösung mit einer Viskosität von 46.000 mPas · s/23 °C erhalten. Nach 20 Tagen bei Raumtemperatur mißt man eine Viskosität von 46.500 mPa · s/23 °C. Sie hat sich also praktisch nicht verändert.

### Beispiel 3

Eine Lösung von 2.000 Teilen (1,0 Mol) eines linearen Propylenoxid-Polyethers, gestartet mit 1,2-Propandiol und mit einem mittleren Molekulargewicht von 2.000, in 400 Teilen DMF wird mit 676 Teilen (2,7 Mol) 4,4'-Diisocyanatodiphenylmethan umgesetzt. Das erhaltene Prepolymer läßt man mit 150 Teilen (0,05 Mol) eines trifunktionellen Propylenoxid-Polyethers, gestartet mit Trimethylolpropan und mit einem mittleren Molekulargewicht von 3.000, und mit 153 Teilen (1,7 Mol) 1,4-Butandiol reagieren.

Während der Umsetzung wird portionsweise mit 315 Teilen DMF, 894 Teilen Toluol und 179 Teilen MEK zu einer 40 igen Lösung verdünnt. Mit weiteren 25 Teilen 4,4'-Diisocyanatodiphenylmethan wird die gewünschte Viskosität erreicht. Durch Zugabe von 15 Teilen Butanonoxim wird die Reaktion abgebrochen ; der NCO-Gehalt der Lösung ist kleiner als 0,1 %. Man erhält eine viskositätsstabile Lösung mit 30.000 mPa · s/23 °C, die sich beim Lagern nicht verändert.

### Beispiel 4

Man setzt 900 Teile (1,0 Mol) eines Polyesters aus Adipinsäure und Butandiol mit einem mittleren Molekulargewicht von 900 mit 87 Teilen (0,5 Mol) Toluylendiisocyanat (65 % 2,4-Isomeres, 35 % 2,6-Isomeres) zu einem Prepolymer um. Das OH-terminierte Prepolymer wird zusammen mit 93 Teilen (1,5 Mol) 1,2-Ethandiol und mit 500 Teilen (2,0 Mol) 4,4'-Diisocyanatodiphenylmethan in 2.054 Teilen DMF/MEK (1 : 1) zu einer Polyurethanlösung umgesetzt. Nach Erreichen einer Viskosität von ca. 18.000 mPa · s bei 80 °C wird die Reaktion durch Zugabe von 8 Teilen Butanonoxim abgebrochen. Man erhält· eine 35 %ige Lösung mit einer Viskosität von 50.000 mPa · s/23 °C, die sich bei mehrwöchigem Lagern nicht verändert.

### Beispiel 5

Man setzt 1.700 Teile (1,0 Mol) eines Hydroxylpolyesters aus Adipinsäure und Hexandiol und Neopentylglycol mit einem mittleren Molekulargewicht von 1.700 mit einem Gemisch aus 333 Teilen (1,5 Mol) Isophorondiisocyanat und 84 Teilen (0,5 Mol) Hexamethylendiisocyanat in 2.146 Teilen DMF, das portionsweise mit ansteigender Viskosität zugegeben wird, um. Als Kettenverlängerungsmittel läßt man mit 29 Teilen (0,9 Mol) Hydrazin reagieren. Nachdem die 50 %ige Lösung bei 80 °C eine Viskosität von 18.000 mPa · s erreicht hat (NCO-Gehalt der Lösung ( 0,1 %) wird die Umsetzung durch Einrühren von 12 Teilen Butanonoxim abgebrochen. Man erhält eine 50 %ige Polyurethanlösung mit einer Viskosität von 50.000 mPa · s/23 °C, die sich beim Lagern nicht ändert.

### Beispiel 6

In diesem Beispiel wird die Stabilisierung einer Polyurethanlösung mit Butanonoxim und mit Butanol durchgeführt, wobei Butanol in einem noch größeren Überschuß eingesetzt wird.

Man setzt 2.250 Teile (1,0 Mol) des gleichen Polyesters wie in Beispiel 1 und 2 und 216 Teile (2,4 Mol) 1,4-Butandiol in 6.158 Teilen DMF/Toluol (3 : 2) mit 851 Teilen (3,4 Mol) 4,4'-Diisocyanatodiphenylmethan bei 80 °C um. Man erhöht die Viskosität der erhaltenen Lösung durch nachträgliche Kettenverlängerung unter Zugabe von 48 Teilen 4,4'-Diisocyanatodiphenylmethan und teilt die Lösung in vier gleiche Portionen.

Bei den Portionen 6/1 und 6/2 wird die Polyadditionsreaktion zum gleichen Zeitpunkt durch Zugabe von einmal 6 Teilen Butanonoxim (6/1) und einmal 50 Teilen n-Butanol (6/2) abgebrochen.

Die Portionen 6/3 und 6/4 läßt man weiter reagieren und gibt nach 6 h bei 80 °C 6 Teile Butanonoxim (6/3) und bei 6/4 10 Teile Butanol zu.

Die erhaltenen Viskositäten sind tabellarisch zusammengestellt :

| Portion | Viskosität (Beginn) /¯mPa·s/23°C_/ | Viskosität (nach 5 Tagen) /¯mPa·s/23°C_/ |
|---|---|---|
| 6/1 | 36.000 | 36.000 |
| 6/2 | 35.000 | 60.000 |
| 6/3 | 140.000 | 142.000 |
| 6/4 | 135.000 | 180.000 |

**Patentanspruch**

Verfahren zur Herstellung von überwiegend linearen Polyurethanen in Lösung, aus

A) einem organischen Diisocyanat oder Diisocyanatgemisch, das gegebenenfalls geringe Anteile eines Triisocyanats enthält,

B) einer oder mehreren Polyhydroxyverbindungen, die überwiegend bifunktionell sind, mit Molekulargewichten zwischen 400 und 5.000, und

C) gegebenenfalls einem oder mehreren Kettenverlängerungsmitteln mit mindestens zwei gegenüber Isocyanatgruppen reaktiven Wasserstoffatomen und mit Molekulargewichten zwischen 32 und 399,

D) monofunktionellen Kettenabbrechern,

wobei das Verhältnis der Isocyanatgruppen zur Anzahl der gegenüber Isocyanatgruppen reaktiven Wasserstoffatome zwischen 0,9 : 1 und 1 : 0,9 liegt, dadurch gekennzeichnet, daß dem Reaktionsgemisch nach Erreichen der erforderlichen Viskosität als monofunktionelle Kettenabbrecher eine gegenüber Isocyanatgruppen äquivalente oder überschüssige Menge eines niedermolekularen, aliphatischen, cycloaliphatischen oder araliphatischen Monooxims mit einem Molekulargewicht zwischen 73 und 325 zugegeben wird.

**Claim**

Process for the preparation of predominantly linear polyurethanes in solution, from

A) an organic diisocyanate or diisocyanate mixture which optionally contains small amounts of a triisocyanate,

B) one or more polyhydroxyl compounds, which are predominantly bifunctional, having molecular weights between 400 and 5,000, and

C) optionally one or more chain-lengthening agents having at least two hydrogen atoms which are reactive towards isocyanate groups and having molecular weights between 32 and 399, and

D) monofunctional chain stoppers,

the ratio of the isocyanate groups to the number of hydrogen atoms which are reactive towards isocyanate groups being between 0.9 : 1 and 1 : 0.9, characterised in that a quantity, which is equivalent to or in excess of the isocyanate groups, of a low molecular weight, aliphatic, cycloaliphatic or araliphatic monooxime having a molecular weight between 73 and 325 is added as the monofunctional chain stopper to the reaction mixture when the required viscosity has been reached.

**Revendication**

Procédé de préparation de polyuréthanes principalement linéaires en solution à partir de

A) un diisocyanate organique ou un mélange de diisocyanates contenant éventuellement de faibles quantités d'un triisocyanate,

B) un ou plusieurs composés polyhydroxy qui sont principalement difonctionnels et qui ont des poids moléculaires se situant entre 400 et 5 000, et

C) éventuellement un ou plusieurs agents d'allongement de chaîne comportant au moins deux atomes d'hydrogène réactifs vis-à-vis des groupes isocyanate et ayant des poids moléculaires se situant entre 32 et 399,

D) des agents monofonctionnels de rupture de chaîne,

le rapport entre les groupes isocyanate et le nombre d'atomes d'hydrogène réactifs vis-à-vis des groupes isocyanate se situant entre 0,9 : 1 et 1 : 0,9, caractérisé en ce que, après avoir atteint la viscosité requise, comme agent monofonctionnel de rupture de chaîne, on ajoute, au mélange réactionnel, une monooxime araliphatique, cycloaliphatique ou aliphatique d'un faible poids moléculaire se situant entre 73 et 325 en une quantité équivalente ou excédentaire vis-à-vis des groupes isocyanate.